# EUROPEAN PATENT SPECIFICATION

(11) **EP 3 901 108 B1**
(45) Date of publication and mention of the grant of the patent: **08.11.2023**
(21) Application number: 21169972.3
(22) Date of filing: 22.04.2021
(51) Int. Cl.: C03B 37/029

(54) **PARTICLE EXHAUST APPARATUS FOR OPTICAL FIBER DRAW FURNACE**
PARTIKELABFÜHRUNGSVORRICHTUNG FÜR EINEN GLASFASERZIEHOFEN
APPAREIL DE RÉCUPÉRATION DE PARTICULES POUR FOUR D'ÉTIRAGE DE FIBRE OPTIQUE

(30) Priority: 24.04.2020 US 202063014793 P; 25.05.2020 NL 2025663
(43) Date of publication of application: 27.10.2021
(73) Proprietor: Corning Incorporated, Corning, New York 14831 (US)
(72) Inventor: CHEN, Guo-Qiang, CORNING, 14831 (US); LIU, Zhi Ming, CORNING, 14831 (US)
(74) Representative: Arnold & Siedsma

(56) References cited:
- JP-A- H08 119 661
- JP-A- 2004 250 286
- US-A1- 2017 101 336

## Description

### FIELD

The present disclosure generally relates to a fiber draw furnace, and more specifically, to a method and system for reclaiming gas in the fiber draw furnace.

### BACKGROUND

Helium gas is used in various stages of conventional fiber manufacturing processes. For some manufacturing processes, a large fraction of the consumption of helium is in a fiber draw furnace where active purging of the furnace with an inert gas is required to prevent air entrainment and oxidation of the hot components of the furnace. Helium is a nonrenewable resource recovered as a byproduct from natural gas wells. As the price of helium is projected to increase in the future, and supply shortages disrupt fiber production, removing and/or reusing helium from the fiber draw furnace may be advantageous. In addition, draw furnace particles are identified as major fiber break source in optical fiber making process, typically particles generated inside a draw furnace come from two parts which can impinge running fiber, causing bare fiber surface crack, and then break the fiber when the crack depth is over the critical break size under certain tension. The two major types of surface particles are residual particles on the muffle surface and aerosol suspension particles within the furnace gas flow. Accordingly, there is a need to provide methods and apparatuses that will allow reclamation of helium from the fiber draw furnace and reduce or eliminate particle accumulation within the furnace.

JP2004 250286 A relates to an optical fiber drawing apparatus for successively heating and melting a glass preform while supplying gaseous helium around a glass preform to draw an optical fiber which is provided with a gaseous helium recovery mechanism for recovering helium gas at the lower part of the drawing furnace. The helium gas recovery mechanism has a plurality of gas suction ports around the optical fiber and has a helium gas buffering wall part and an inert gas supply part. The recovered helium gas is purified and recycled.

JPH08 119661 A relates to an hermetic drawing device for optical fiber.

US 2017/101336 A1 states in its abstract: 'A method of producing an optical fiber is provided that includes the steps of flowing a first gas into an optical fiber draw furnace. The first gas is passed through a heated section configured to contain and heat a glass source from which the optical fiber is drawn, passing the first gas through a muffle which defines a capture chamber. A portion of the first gas is removed through at least one reclaim port operatively coupled to the capture chamber. A second gas flows into a gas screen at a rate configured to substantially recover a pressure drop associated with removing the portion of the first gas.'

### SUMMARY

According to a first embodiment of the present disclosure, a reclaim cylinder, includes: a single housing (60) coupled to a fiber draw furnace system, the housing defining a reclaim chamber 64, a plurality of gas reclaim ports (68) spaced equidistant from each other and tangentially coupled to the housing, a gas sampling port (52) tangentially or perpendicularly coupled to the outer housing, and a particle sampling port (54) tangentially or perpendicularly coupled to the outer housing.

According to a second embodiment of the present disclosure, the reclaim cylinder of the first embodiment, the fiber draw furnace system comprises: a heated section (22) having a first end (22A) and a second end (22B), wherein the heated section is configured to hold an optical fiber preform (38); an upper gas inlet (14) coupled to the first end of the heated section, wherein the upper gas inlet is configured to flow a first gas into the heated section; a lower extended muffle (30) having a first end (30A) and a second end (30B); a lower gas inlet (34) coupled to the second end of the lower extended muffle configured to allow a gas to flow into the lower extended muffle; and wherein the reclaim cylinder (26) is coupled to the lower extended muffle between the first end of the lower extended muffle and the second end of the heated section.

According to a third embodiment of the present disclosure, the reclaim cylinder of the first and second embodiment, wherein the housing of the reclaim cylinder defines a first end coupled to the heated section and a second end coupled to the first end of the lower extended muffle

According to a fourth embodiment of the present disclosure, the reclaim cylinder of the third embodiment, wherein the plurality of gas reclaim ports are closer to the second end of the housing than the first end of the housing.

According to a fifth embodiment of the present disclosure, the reclaim cylinder of the third embodiment, wherein the gas sampling port and the particle sampling port are closer to the first end of the housing than the second end of the housing.

According to a sixth embodiment of the present disclosure, the reclaim cylinder of the first through fifth embodiment, wherein the gas sampling port and the particle sampling port are positioned along a length of the housing at the same height relative to each other.

According to a seventh embodiment of the present disclosure, the reclaim cylinder of the first through fifth embodiment, wherein the gas sampling port and the particle sampling port are positioned along a length of the housing at a 90 degree offset from each other

According to an eighth embodiment of the present disclosure, the reclaim cylinder of the first through seventh embodiment, wherein an internal diameter of the housing is about 4.2 cm to about 7.8 cm.

According to a ninth embodiment of the present disclosure, the reclaim cylinder of the first through seventh embodiment, wherein an external diameter of the housing is about 4.4 cm to about 7.8 cm.

According to a tenth embodiment of the present disclosure, the reclaim cylinder of the first through ninth embodiment, further comprising: a tube extending from the second end of the lower extended muffle toward the first end that is substantially coaxial with the lower extended muffle.

According to an eleventh embodiment of the present disclosure, the reclaim cylinder of the tenth embodiment, wherein the tube extends from a lower extended muffle outlet.

According to a twelfth embodiment of the present disclosure, the reclaim cylinder of the first through eleventh embodiment, wherein the plurality of gas reclaim ports are configured to generate a gas vortex within the reclaim chamber.

According to a thirteenth embodiment of the present disclosure, the reclaim cylinder of the first through twelfth embodiment, wherein the plurality of gas reclaim ports are configured to remove a portion of the first gas from the reclaim chamber.

According to a fourteenth embodiment of the present disclosure, the reclaim cylinder of the first through thirteenth embodiment, wherein the lower gas inlet is configured to pass the second gas at a rate configured to substantially recover a pressure drop associated with removing the portion of the first gas.

According to a fifteenth embodiment of the present disclosure, a method of producing an optical fiber, includes the steps of: flowing a first gas into an optical fiber draw furnace; passing the first gas through a heated section of the optical fiber draw furnace; passing the first gas into a reclaim cylinder coupled to the of the optical fiber draw furnace, the reclaim cylinder comprising: a housing (60) defining a reclaim chamber 64, a plurality of gas reclaim ports (68) spaced equidistant from each other and tangentially coupled to the housing, a gas sampling port (52) tangentially or perpendicularly coupled to the outer housing, and a particle sampling port (54) tangentially or perpendicularly coupled to the outer housing; removing a portion of the first gas through the plurality of gas reclaim ports fluidly coupled to the reclaim cylinder such that a vortex of the first gas is generated in the reclaim cylinder, wherein the plurality of gas reclaim ports are spaced equidistant from each other and are tangentially coupled to the outer housing; and flowing a second gas from a gas inlet at a rate configured to substantially recover a pressure drop associated with removing the portion of the first gas.

According to a sixteenth embodiment of the present disclosure, the method of the fifteenth embodiment, wherein the optical fiber draw furnace comprises: the heated section (22) having a first end (22A) and a second end (22B), wherein the heated section is configured to hold an optical fiber preform (38); an upper gas inlet (14) coupled to the first end of the heated section, wherein the upper gas inlet is configured to flow a first gas into the heated section;
a lower extended muffle (30) having a first end (30A) and a second end (30B); and
a lower gas inlet (34) coupled to the second end of the lower extended muffle configured to allow a gas to flow into the lower extended muffle;
According to a seventeenth embodiment of the present disclosure, the method of the sixteenth embodiment, wherein the reclaim cylinder is coupled to the lower extended muffle between the first end of the lower extended muffle and the second end of the heated section.

According to an eighteenth embodiment of the present disclosure, the method of the sixteenth embodiment, further comprising the step: passing a portion of the first gas from the reclaim cylinder into the lower extended muffle.

According to a nineteenth embodiment of the present disclosure, the method of the fifteenth through eighteenth embodiment, wherein the step of removing the portion of first gas further comprises: removing the portion of the first gas such that an axis of rotation of the vortex is parallel with an axis of the reclaim cylinder.

According to a twentieth embodiment of the present disclosure, the method of the fifteenth through nineteenth embodiment, wherein the step of flowing a first gas into an optical fiber draw furnace further comprises: flowing the first gas comprising helium into the optical fiber draw furnace.

According to a twenty-first embodiment of the present disclosure, the method of the fifteenth through twentieth embodiment, wherein the step of flowing the second gas from the gas inlet further comprises: flowing the second gas comprising a gas which is inert to the optical fiber from the gas inlet.

According to a twenty-second embodiment of the present disclosure, the method of the sixteenth through twenty-first embodiment, wherein the housing of the reclaim cylinder defines a first end coupled to the heated section and a second end coupled to the first end of the lower extended muffle
According to a twenty-third embodiment of the present disclosure, the method of the twenty-second embodiment, wherein the plurality of gas reclaim ports are closer to the second end of the housing than the first end of the housing.

According to a twenty-fourth embodiment of the present disclosure, the method of the twenty-second embodiment, wherein the gas sampling port and the particle sampling port are closer to the first end of the housing than the second end of the housing.

According to a twenty-fifth embodiment of the present disclosure, the method of the fifteenth through the twenty-fourth embodiment, wherein the gas sampling port and the particle sampling port are positioned along a length of the housing at the same height relative to each other.

According to a twenty-sixth embodiment of the present disclosure, the method of the fifteenth through the twenty-fifth embodiment, wherein the gas sampling port and the particle sampling port are positioned along a length of the housing at a 90 degree offset from each other

According to a twenty-seventh embodiment of the present disclosure, the method of the fifteenth through the twenty-sixth embodiment, wherein an internal diameter of the housing is about 4.2 cm to about 7.8 cm.

According to a twenty-eighth embodiment of the present disclosure, the method of the fifteenth through the twenty-seventh embodiment, wherein an external diameter of the housing is about 4.4 cm to about 7.8 cm.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiments, and together with the description serve to explain principles and operation of the various embodiments.

### BRIEF DESCRIPTION OF THE DRAWINGS

FIG. 1 is cross-sectional view of an optical fiber draw furnace, according to one embodiment;
FIG. 2A is a reclaim cylinder, according to one embodiment;
FIG. 2B is a perspective view of a reclaim cylinder, according to one embodiment;
FIG. 2C is a cross sectional view of a reclaim cylinder, according to one embodiment;
FIG. 3 is an enhanced view taken at section III of FIG. 1, according to one embodiment;
FIG. 4A is an enhanced view taken at section IVA of FIG. 3, according to another embodiment;
FIG. 4B is an enhanced view taken at section IVB of FIG. 3, according to another embodiment;
FIG. 4C is an enhanced view taken at section IVC of FIG. 3, according to another embodiment;
FIG. 5 is a flow diagram of an exemplary method, according to one embodiment;
FIG. 6A-6B is a radial velocity distribution of a reclaim cylinder, according to one embodiment; and
FIG. 7 is a radial velocity distribution of a purge cycle of a reclaim cylinder, according to one embodiment.

### DETAILED DESCRIPTION

Reference will now be made in detail to the present preferred embodiments, examples of which are illustrated in the accompanying drawings. Whenever possible, the same reference numerals will be used throughout the drawings to refer to the same or like parts.

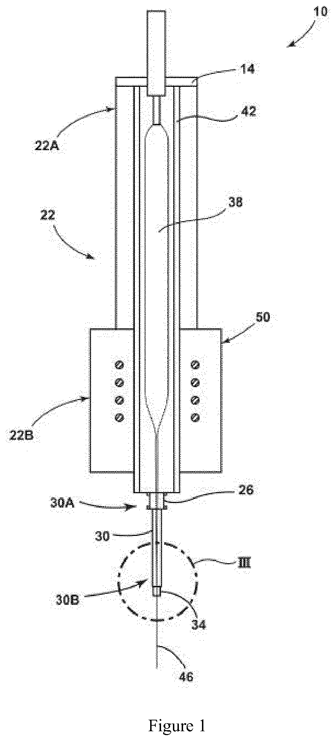

For purposes of description herein, the terms "upper," "lower," "right," "left," "rear," "front," "vertical," "horizontal," and derivates thereof, shall relate to the disclosure as oriented in FIG. 1, unless stated otherwise. However, it is to be understood that the disclosure may assume various alternative orientations, except where expressly specified to the contrary. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise. Additionally, embodiments depicted in the figures may not be to scale or may incorporate features of more than one embodiment.

Referring to FIG. 1, a fiber draw furnace 10 is generally shown. The fiber draw furnace 10 includes an upper gas inlet 14, a heated section 22, a reclaim cylinder 26, a lower extended muffle 30, and a bottom gas inlet 34.

The heated section 22 may have a first end 22A and a second end 22B. The first end 22A of the heated section 22 may generally be the top and the second end 22B may generally be the bottom of the heated section 22.

The lower extended muffle 30 may have a first end 30A and a second end 30B. The first end 30A of the lower extended muffle 30 may generally be the top of the lower extended muffle 30 and the second end 30B may generally be the bottom of the lower extended muffle 30.

An optical fiber preform 38 and a muffle 42 are positioned within the heated section 22. The optical fiber preform 38 may be constructed of any glass or material and may be doped suitable for the manufacture of an optical fiber 46. In some embodiments, the optical fiber preform 38 may include a core and a cladding. In some embodiments, the optical fiber preform 38 may be heated such that the viscosity of the optical fiber preform 38 is lowered and the optical fiber 46 is drawn therefrom. The optical fiber 46 is drawn from the optical fiber preform 38 out through the reclaim cylinder 26, through the lower extended muffle 30 and out a bottom of the fiber draw furnace 10 and may be wound onto a spool.

The upper gas inlet 14 is positioned within or coupled to an upper portion of the heated section 22. The upper gas inlet 14 is configured to inject, release or otherwise flow a first gas into the heated section 22. The upper gas inlet 14 may be a single inlet port, a plurality of inlet ports and/or a continuous or semi-continuous opening configured to inject the first gas into the heated section 22. It will be understood that the upper gas inlet 14 may include one or more gratings or screens configured to modify flow characteristics of the first gas. The first gas may travel into the heated section 22, around the optical fiber preform 38 and into the reclaim cylinder 26.

The first gas may include one or more gases which are inert to the heated section 22, the optical fiber preform 38 and/or other components of the fiber draw furnace 10. For example, the first gas may include helium, argon, nitrogen, and/or other inert gases. In some embodiments, the first gas includes helium. Inert examples of the first gas may be advantageous in preventing oxidation and/or damage from occurring to components of the fiber draw furnace 10. The upper gas inlet 14 may inject the first gas at a rate of between about 5 standard liters per minute (SLPM) and about 100 SLPM. In specific examples, the upper gas inlet 14 may inject the first gas at a flow rate of about 15 SLMP, 16 SLPM, 17 SLPM, 18 SLPM, 19 SLPM, 20 SLPM, 21 SLPM, 22 SLPM, 23 SLPM, 24 SLPM, 30 SLPM, 40 SLPM, 50 SLPM, 60 SLPM, 70 SLPM, 80 SLPM, 90 SLPM or any value or range between these values.

A heater 50 is thermally coupled to the muffle 42 of the heated section 22 and is configured to create a hot zone within the heated section 22 of the fiber draw furnace 10. Specifically, the hot zone may have a temperature of from about 1800° C. to about 2000° C. For example, the hot zone may have a temperature of about 1700° C., 1800° C., 1900° C., or about 2000° C., or any value or range between these values. The heat of the hot zone in the heated section 22 is configured to lower the viscosity of the optical fiber preform 38 such that the optical fiber 46 is drawn therefrom. The optical fiber 46 may be drawn from the optical fiber preform 38 at a rate of between about 30 m/s and about 60 m/s, or between about 40 m/s and about 50 m/s. In a specific example, the optical fiber 46 may be drawn from the fiber preform 38 at a rate of about 50 m/s.

The muffle 42 is positioned within the heated section 22 around the optical fiber preform 38. The muffle 42 and/or lower extended muffle 30 may be composed of a refractory material such as graphite, zirconia, binders and/or combinations thereof. The muffle 42 and lower extended muffle 30 may be configured to retain heat within the fiber draw furnace 10 as well as protect other components from excess temperatures. Although the materials of the muffle 42 and/or lower extended muffle 30 may generally be good insulators, oxidation may occur at elevated temperatures. As such, the first gas may be inserted or injected into the fiber draw furnace 10 to prevent oxidation of the muffle 42 and/or lower extended muffle 30. The muffle 42 and/or the lower extended muffle 30 may have a substantially uniform inner diameter, or the inner diameter may be varied throughout.

As explained above, while graphite offers superior thermal resistance properties, oxidation of a graphite muffle **42** may also increase the likelihood of draw induced point defects ("DIPDs") being generated on the optical fiber **46.** Oxidation occurs when gases from the ambient atmosphere (e.g., oxygen-containing compounds) and/or impurities within the first gas react with the graphite of the muffle **42** at high temperature according to equations (1) and (2):

C+O₂→CO₂ (1)

C+CO₂→2CO (2)

Additionally or alternatively, silica particles (e.g., from the optical fiber preform **38**) can oxidize carbon based materials based on reaction (3):

C+SiO₂→SiC+2CO (3)

These reactions at the muffle **42** with oxygen, silicon dioxide and oxygen-containing gases may cause the muffle **42** to be consumed, especially at elevated drawing temperatures for the optical fiber **46.**

In graphite examples of the muffle 42, the graphite material of the muffle 42 is a composite of graphite grains bonded together by a carbon binder matrix. The binder material is more susceptible to oxidation than the graphite grains. Therefore, when the composite of the two materials is exposed to oxygen-containing compounds at high temperatures, the matrix binder material preferentially oxidizes. The graphite grains, having no binder left to hold them in place, are then free to fall away from the muffle 42. Without being bound by theory, it is believed that this mechanism causes graphite particulates to migrate from the muffle 42 to the optical fiber 46 during drawing thereby inducing draw induced point defects (DIPDs). DIPDs manifest themselves as sharp attenuation increases in the signal transmitted through the optical fiber 46. The larger the graphite particulate, the greater the chance of the DIPD being formed on the optical fiber 46.

Without being bound by theory, it is believed that conventional furnace designs result in the collection of particles in the furnace 10. Exemplary particles that may accumulate in the furnace are carbon (C), silicon carbide (SiC), silicon oxide (SiO), silicon dioxide (SiOz), or a combination thereof. Carbon particles, ranging from about 2 um to 200 um in size, can accumulate on the interior surface of the muffle (42). Silicon carbide (SiC) particles, ranging in size from about 2 um to about 5000 um, can accumulate on the wall of the heater (50) below the hot zone. Silicon oxide and silicon dioxide particles, ranging in size from about 2 um to about 120 um, can accumulate on the wall of the lower extended muffle 30. The particles agglomerate over time and grow in size. Upward moving currents of gas moving along the lower extended muffle 30 (e.g., generally moving from the second end 30B to first end 30A) may cause these agglomerated particles to break free and be carried upward. The upward motion of the agglomerated particles may allow the particles to contact the optical fiber 46 where the optical fiber 46 is still at an elevated temperature and form DIPDs. In addition to collecting and agglomerating the particles, conventional systems may promote a recirculation, or reversed flow, of gasses such as CO rather than being transported out of the fiber draw furnace 10. Such a recirculation may result in a decreased life expectancy of the muffle 42 based on equations (1), (2) and (3) listed above. In other words, the gasses which tend to deteriorate the muffle 42 may have an increased residence time within the muffle 42 due to recirculation, resulting in a decreased life expectancy of the muffle 42.

The bottom gas inlet 34 may aid in preventing the loss of the first gas to an exterior of the fiber draw furnace 10 as well as the entraining of air into the furnace 10. The bottom gas inlet 34 is positioned at the second end 30B, or bottom, of the lower extended muffle 30. The bottom gas inlet 34 is fluidly coupled with the lower extended muffle 30 such that the bottom gas inlet 34 may flow a second gas into the lower extended muffle 30. According to various examples, the bottom gas inlet 34 is configured to pass the second gas at a rate configured to substantially recover a pressure drop associated with removing the portion of the first gas by the at least one reclaim port 68. As will be explained in greater detail below, the reclaim ports 68 may create a pressure drop within the fiber draw furnace 10 when gases within the reclaim cylinder 26 are drawn in. The development of the pressure drop within the fiber draw furnace 10 may be deleterious to the reclamation of gases as well as to the production of the optical fiber 46. As the pressure drops within the fiber draw furnace 10 from the removal of gases within the reclaim cylinder 26, the air in the atmosphere (e.g., nitrogen, oxygen, carbon dioxide, etc.) proximate an outlet 30C of the lower extended muffle 30 may have a tendency to be drawn into the fiber draw furnace 10 and contaminate the atmosphere within the fiber draw furnace 10 (i.e., dilute the first gas and/or introduce gases which may aid in the formation of particles). Accordingly, the bottom gas inlet 34 is configured to input, inject or otherwise flow the second gas into the lower extended muffle 30 of the fiber draw furnace 10 at a flow rate, or amount, configured to recover the pressure drop in the furnace 10 associated with the removal of the first gas. The bottom gas inlet 34 may introduce the second gas at a flow rate of between about 1 SLPM and about 40 SLPM, or between about 5 SLPM and about 35 SLPM, or between about 10 SLPM and about 30 SLPM, or between about 25 SLPM and about 35 SLPM, or between about 28 SLPM and about 33 SLPM. In some examples, the bottom gas inlet 34 may introduce the second gas at a flow rate of about 8 SLPM, about 9 SLPM, about 10 SLPM, about 11 SLPM, about 12 SLPM, about 29 SLPM, about 30 SLPM, about 31 SLPM, or about 32 SLPM. In other examples, the bottom gas inlet 34 may introduce the second gas at a flow rate of about 0.5 SLPM, about 1 SLPM, about 2 SLPM, about 3 SLPM, about 4 SLPM, about 5 SLPM, about 6 SLPM, or about 7 SLPM. The second gas may be an inert, or largely inert, gas such as helium, neon, argon, nitrogen and/or other inert gases. Further, the second gas may be different than or have a different composition than the first gas. For example, the second gas may include helium, nitrogen, argon, other gases inert within the fiber draw furnace 10 and/or combinations thereof.

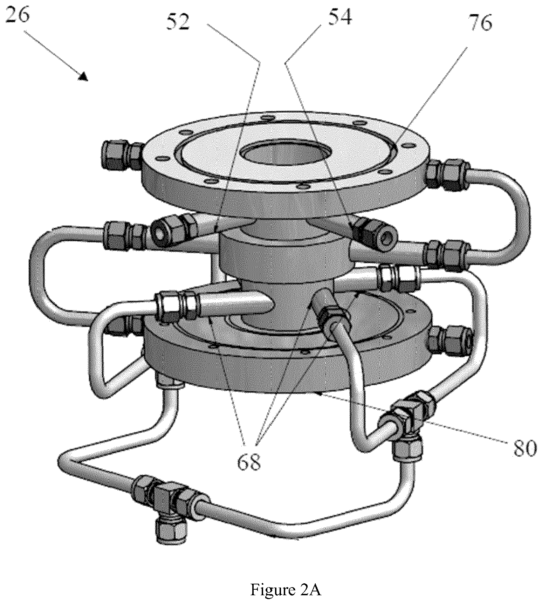

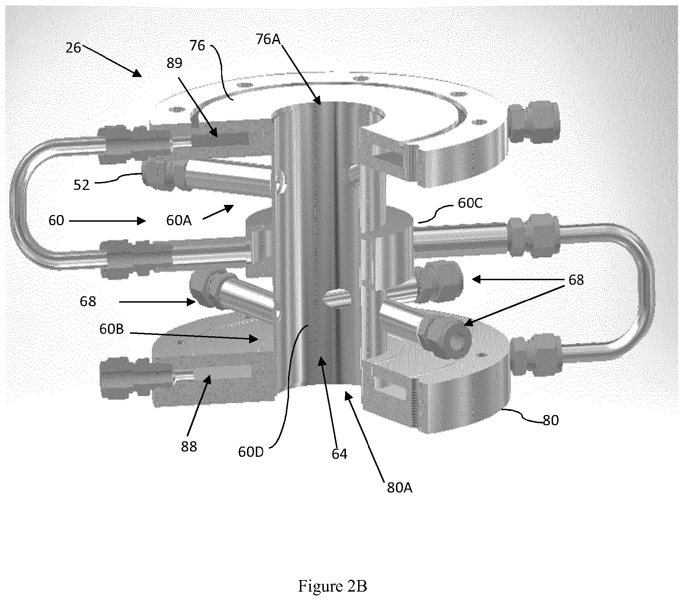

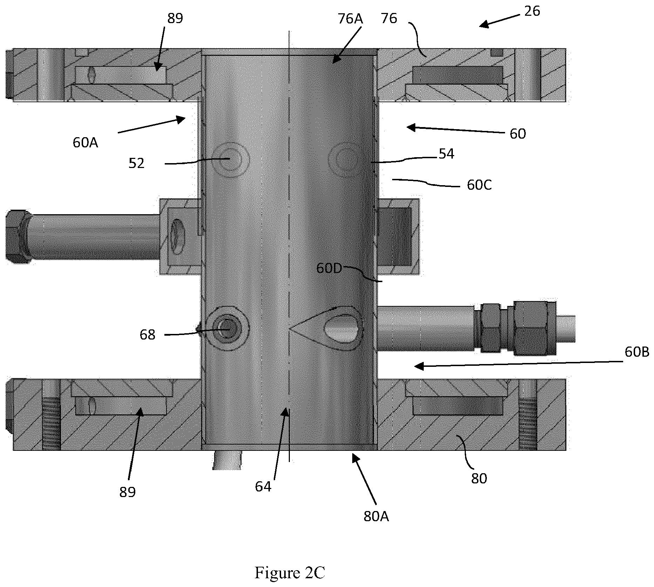

Referring now to FIGS. 1 and 2, the reclaim cylinder 26 is depicted as positioned between the heated section 22 and the lower extended muffle 30, but it will be understood that other positions within the fiber draw furnace 10 are contemplated. In other words, the reclaim cylinder 26 is positioned between the second end 22B of the heated section 22 and the first end 30A of the lower extended muffle 30. As such, the reclaim cylinder 26 may be coupled to the lower extended muffle 30 and the heated section 22. The reclaim cylinder 26 includes a singular housing 60 defining a reclaim chamber 64, at least one reclaim port 68 (e.g. one reclaim port, two reclaim ports, three reclaim ports, or four reclaim ports), a CO sampling port 52, a particle sampling port 54, a top flange 76 and a bottom flange 80. It will be understood that the reclaim cylinder 26 may further include a variety of hoses and pipes fluidly coupled with the reclaim port(s) 68 and one or more mechanical fasteners which hold the reclaim cylinder 26 together.

The top flange 76 is positioned proximate a first end 60A of the housing 60 and the bottom flange 80 is positioned proximate a second end 60B of the housing 60. It will be understood that the first end 60A may generally be the top of the reclaim cylinder 26 and the second end 60B may generally be the bottom of the reclaim cylinder 26. As such, the top flange 76 couples the first end 60A of the housing 60 to the second end 22B of the heated section 22 and the bottom flange 80 couples the second end 60B of the housing 60 to the first end 30A of the lower extended muffle 30. According to various examples, the top and bottom flanges 76, 80 each define a fluid channel 89. The fluid channels 89 are configured to flow a cooling liquid there through. The cooling liquid in the fluid channels 89 may be water, oil and/or other fluids configured to remove heat from the top and bottom flanges 76, 80. Use of the fluid channels 89 within the top and bottom flanges 76, 80 may be advantageous in cooling O-rings which couple the top flange 76 to the heated section 22 and/or the lower flange 80 to the lower extended muffle 30. In such examples, the O-rings may provide a seal between the heated section 22 and the reclaim chamber 26 and the lower extended muffle 30 in the reclaim chamber 26. The top flange 76 defines a top aperture 76A and the bottom flange 80 defines a bottom aperture 80A. It will be understood that gases (e.g., the first and/or second gases) as well as the optical fiber 46 may move or pass through the top and bottom apertures 76A, 80A.

As explained above, the housing 60 includes the first end 60A and the second end 60B. The housing 60 also includes an exterior surface 60C and an interior surface 60D. The housing 60 may have a height or overall length (e.g., as measured from edges of the first and second ends 60A, 60B) of from about 7 cm to about 18 cm. In some embodiments, the housing 60 may have a length of about 12 cm, or about 12.5 cm, or about 13 cm, or about 13.5 cm, or about 14 cm, or about 14.5 cm, or about 15 cm, or about 15.5 cm, or about 16 cm, or about 16.5 cm or about 17 cm. In some embodiments, the interior surface 60D of the housing 60 may have an internal diameter 56 of about 4.2 cm to about 7.8 cm. As such, the reclaim chamber 64 may have a diameter of from about 4.2 cm to about 7.8 cm. The exterior surface 60C of the housing 60 may have an outside diameter that is the sum of the inner diameter plus the thickness (2 mm) of housing. In some embodiments, the outer diameter is about 4.4 cm to about 8.0 cm. According to various examples, the diameter of the reclaim chamber 64 is similar to an internal diameter of the muffle 42 (i.e., the heated section 22) and/or the lower extended muffle 30. For example, a cross-sectional area of the reclaim chamber 64, as measured in a plane perpendicular to a centerline axis of the muffle 42 and/or the lower extended muffle 30, may be about 10% or greater, about 20% or greater, about 30% or greater than a cross-sectional area of the muffle 42 and/or lower extended muffle 30. It will be understood that the diameter of the reclaim chamber 64 may vary over the length of the reclaim chamber 64. Further, in some examples only an inlet area of the reclaim chamber 64, where the inlet area is a space proximate the top flange 76, may exhibit a difference in cross-sectional area than the muffle 42. As will be explained in greater detail below, the greater cross-sectional area of the reclaim chamber 64 relative to the muffle 42 and/or lower extended muffle 30 may be advantageous in slowing the speed of the first gas as it passes from the heated section 22 into the reclaim cylinder 26. It will be understood that in examples where the second gas enters the reclaim cylinder 26, the speed of the second gas may also be slowed.

According to various examples, the reclaim port(s) 68, the gas sampling port 52, and the particle sampling port 54 are coupled with the housing 60 of the reclaim cylinder 26. The reclaim cylinder 26 may include one reclaim port 68 or may include a plurality of reclaim ports 68. For example, if the reclaim cylinder 26 includes a plurality of reclaim ports 68, the reclaim cylinder 26 may include two, three, or four reclaim ports 68. In operation, the reclaim ports 68 function as connections for a vacuum to draw, reclaim, suck, or otherwise remove gases (e.g., the first and/or second gases) present within the reclaim chamber 64. Such a removing of gases may be generally referred to as a capture stream.

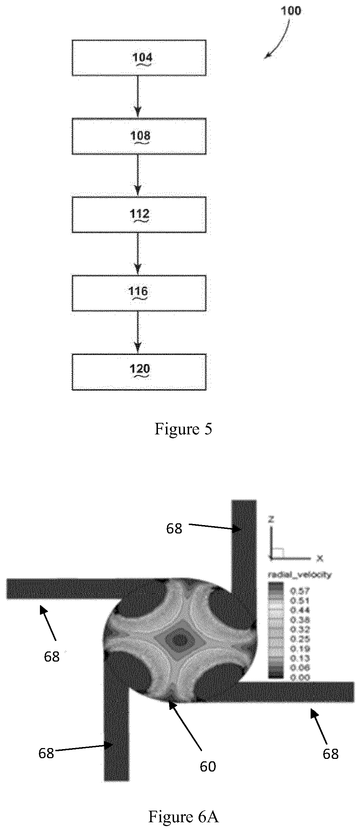

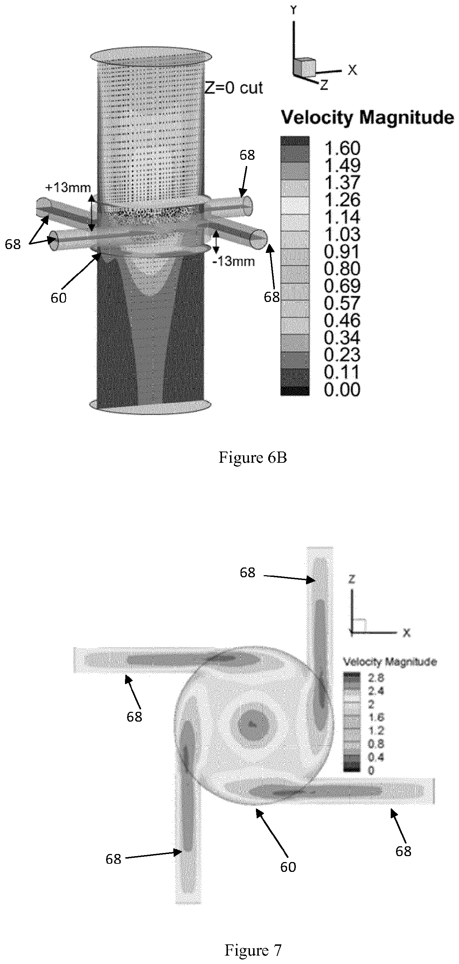

The reclaim ports 68, the gas sampling port 52, and the particle sampling port 54 may be coupled to and/or integrally formed by the housing 60. For example, portions of the reclaim ports 68, the gas sampling port 52, and the particle sampling port 54 may be defined by the housing 60 and other components may be coupled (e.g., mechanically) thereto. According to various examples, the plurality of reclaim ports 68, the gas sampling port 52, and the particle sampling port 54 are tangentially coupled or oriented to the exterior surface 60C of the housing 60. For purposes of this disclosure, the term "tangentially coupled" means that a centerline of each of the reclaim ports 68, the gas sampling port 52, and the particle sampling port 54 intersect the exterior surface 60C and/or interior surface 60D of the housing 60 at an angle of about 45° or less. For example, the centerlines of the plurality of reclaim ports 68 may form an angle with the exterior surface 60C of the housing at about 45° or less, or about 40° or less, or about 35° or less, or about 30° or less, or about 25° or less, or about 20° or less, or about 15° or less, or about 10° or less, or about 5° or less, or about 4° or less, or about 3° or less, or about 2° or less, or about 1° or less or about 0°. As such, the plurality of reclaim ports 68 generally suck or draw gases in the reclaim chamber 64 in a radial direction. FIG. 6A and 6B depict a radial velocity distribution for four reclaim ports 68 tangentially coupled or oriented to the exterior surface 60C of the housing 60. The orientations of the four reclaim ports produce an improved velocity uniformity at the center fiber region, thereby decreasing fiber vibration. It will be understood that different reclaim ports 68 may form different angles with the exterior housing 60 than other reclaim ports 68. For example, one or more reclaim ports 68 may form a first angle (e.g., 20°) with the housing 60 and one or more reclaim ports 68 may form a second angle (e.g., 0°) with the housing 60. In examples of the reclaim cylinder 26 where a plurality of reclaim ports 68 are utilized, the reclaim ports 68 may be spread around a circumference or perimeter of the housing 60 and/or may be grouped. For example, the reclaim cylinder 26 may have groupings of the reclaim ports 68 positioned around the circumference or perimeter of the housing 60.

The reclaim ports 68 may be positioned at a variety of positions along the length of the housing 60. For example, one or more of the reclaim ports 68 may be positioned at a bottom, middle or top of the reclaim cylinder 26. According to various examples, the reclaim ports 68 are positioned proximate the second end 60B of the reclaim chamber 26. In other words, the reclaim ports 68 are closer to the second end 60B of the housing 60 than the first end 60A of the housing 60.

According to various examples, the gas sampling port 52 and the particle sampling port 54 are perpendicularly coupled or oriented to the exterior surface 60C of the housing 60. For purposes of this disclosure, the term "perpendicularly coupled" means that a centerline of each of the gas sampling port 52 and the particle sampling port 54 intersect the exterior surface 60C and/or interior surface 60D of the housing 60 at an angle of 90°. The gas sampling port 52 and the particle sampling port 54 may be positioned at a variety of positions along the length of the housing 60. For example, one or more of the reclaim ports 68 may be positioned at a bottom, middle or top of the reclaim cylinder 26. According to various examples, the gas sampling port 52 and the particle sampling port 54 are positioned proximate the first end 60B of the reclaim chamber 26. In other words, the gas sampling port 52 and the particle sampling port 54 are closer to the first end 60A of the housing 60 than the second end 60B of the housing 60. In some embodiments, the gas sampling port 52 and the particle sampling port 54 are positioned along the length of the housing 60 at the same height relative to each other. In some embodiments, the gas sampling port 52 and the particle sampling port 54 are positioned along the length of the housing 60 at 90 degree offset from each other.

The capture stream drawn in by the reclaim ports 68 may have a flow rate of from about 10 SLPM to about 40 SLPM, or from about 15 SLPM and about 35 SLPM, or from about 20 SLPM and about 30 SLPM. In some examples, the reclaim ports 68 may draw a capture stream having a flow rate of about 29 SLPM, or about 30 SLPM, or about 31 SLPM or about 32 SLPM. According to various examples, one or more of the reclaim ports 68, the gas sampling port 52, and/or the particle sampling port 54 may be equipped with a gas purge device. Such a gas purge device may be configured to pass an inert gas in a reverse manner (e.g., toward the reclaim cylinder 26) through the reclaim ports 68 to clear any particles which may become lodged within and/or partially block the reclaim ports 68 and to clean deposit particles along the inner lower extended muffle wall. FIG. 7 shows velocity distribution comparison of a four ports tangentially oriented to the housing 60. The tangential layout has a higher vortex velocity which helps to blow away deposited particles on the inner wall of the lower extended muffle at idle fiber status.

As the plurality of reclaim ports 68 are generally tangentially coupled or oriented with respect to the housing 60, as the first gas is drawn into the reclaim ports 68 a vortex of the first gas is generated within the reclaim chamber 64. For purposes of this disclosure, the term "vortex" generally means that the gas within the reclaim chamber 64 has a generally circular motion and that the gas has an angular velocity. According to various examples, an axis of rotation of the vortex may be substantially parallel with an axis of the reclaim cylinder 26. In other words, the gases of the vortex may generally move in a circular path around the reclaim chamber 64 with the center of the circular path being generally along the axis of the reclaim cylinder 26. As will be understood, the direction and/or speed of the vortex of the first and second gas within the reclaim chamber 64 may be adjusted by the orientation of the reclaim ports 68 as well as the speed which the gases are drawn from the fiber draw furnace 10. As will be explained in greater detail below, the generation of the vortex of gases within the reclaim chamber 64 may aid in the collection and removal of particulate matter which may otherwise agglomerate and form larger particles in the lower extended muffle 30 and aid in the formation of DIPDs. In addition, the capture stream of gases may be reclaimed, cooled and/or purified for later reuse within the fiber draw furnace 10.

In operation, the fiber draw furnace 10 may allow for both the reclamation of the first gas while also removing particulates generated within the heated section 22. Further, as the second gas may flow from the lower extended muffle 30 into the reclaim cylinder 26, a portion of the second gas may be removed and/or reclaimed. Even further, not all of the first gas may be removed by the one or more reclaim ports 68 such that a portion of the first gas may pass from the reclaim cylinder 26 into the lower extended muffle 30.

As explained above, due to the inertia of larger size particles, the larger particles generated within the heated section 22 may continue through the housing 60 and into the lower extended muffle 30. In other words, the larger particles may follow the path of the optical fiber 46 through the reclaim cylinder 26 and through the lower extended muffle 30. Conversely, the smaller particles, having less inertia, are more subject to the flow of the first and/or second gases. As such, the smaller particles may be captured within the vortex of gases created by the tangential coupling of the plurality of reclaim ports 68 to the housing 60. With the smaller particles entrained within the vortex, the reclaim ports 68 may then remove the particles from the fiber draw furnace 10 along with the first and/or second gases.

As the reclaim cylinder 26 is located closer to the upper gas inlet 14, the concentration, or volume fraction, of the first gas may be greater than the concentration of the second gas within the capture stream drawn off by the reclaim ports 68. For example, the volume fraction (i.e., provided as a percentage) of the first gas within the capture stream may be greater than about 70%, or greater than about 75%, or greater than about 80%, or greater than about 85%, or greater than about 90%, or greater than about 95% or greater than about 99%. The reclaim ports 68 may draw the capture stream at a rate such that the mixed gases are captured at a rate greater than about 50% of the combined first and second gas flow rates. For example, the flow rate of the capture stream from the reclaim ports 68 may be about 50% or greater, or about 55% or greater, or about 60% or greater, or about 65% or greater, or about 70% or greater, or about 75% or greater, or about 80% or greater, or about 85% or greater, or about 90% or greater, or about 95% or greater or about 99% or greater of the combined first gas and second gas flow rates.

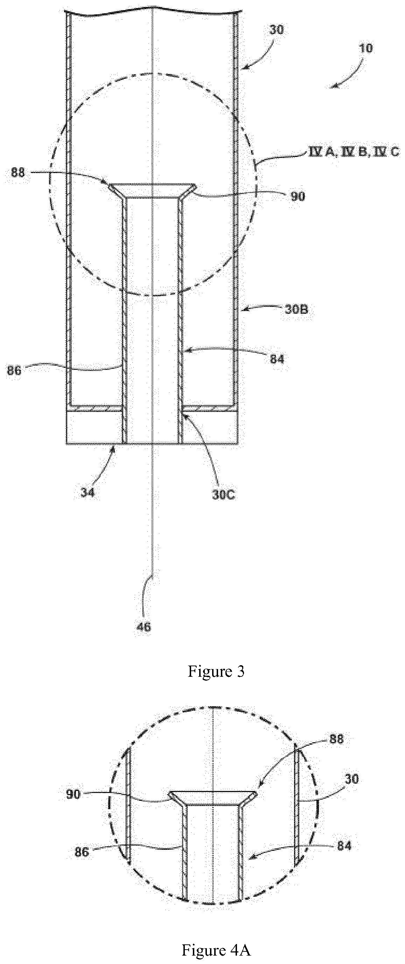

Referring now to FIGS. 3-4C, the lower extended muffle 30 is shown including a tube 84. It will be understood that use of the tube 84 may be optional and that not all of the examples provided herein may include the tube 84. The tube 84 may be coupled to the outlet 30C of the lower extended muffle 30 and/or may be coupled to the bottom gas inlet 34. In operation, the optical fiber 46 is drawn through reclaim cylinder 26, into the lower extended muffle 30, through the tube 84 and out of the fiber draw furnace 10 through the bottom gas inlet 34. The tube 84 extends in an upward direction from the second end 30B toward the first end 30A of the lower extended muffle 30. The tube 84 includes a body 86 and an entrance 88. The body 86 may be substantially coaxial with the lower extended muffle 30 and/or the reclaim cylinder 26. The body 86 of the tube 84 may have an inside diameter of from about 0.25 in (0.635 cm) to about 2.0 in (5.08 cm), or from about 0.5 in (1.27 cm) to about 1.0 in (2.54 cm). In specific examples, the inside diameter of the tube 84 may be about 0.5 in (1.27 cm), about 0.75 in (1.905 cm), about 1.0 in (2.54 cm), or about 1.25 in (3.175 cm). The tube 84 may have a length of from about 1 in (2.54 cm) to about 10 in (25.4 cm), or from about 2 in (5.08 cm) to about 7 in (17.78 cm). In specific examples, the tube 84 may have a length of about 3 in (7.62 cm), about 4 in (10.16 cm), about 5 in (12.7 cm) or about 6 in (15.24 cm).

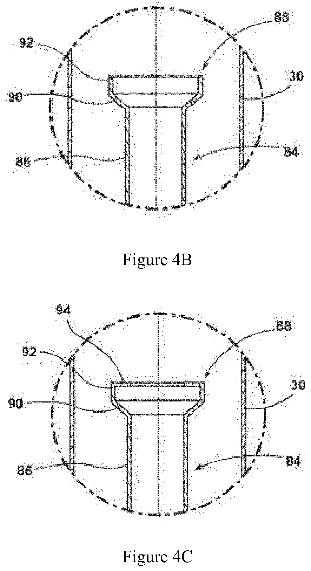

Alteration of the entrance 88 of the tube 84 may decrease or mitigate the number and/or frequency of DIPDSs. FIGS. 4A-C provide various examples of the entrance 88 of the tube 84. The entrance 88 of the tube 84 may take a variety of configurations. In various examples, the entrance 88 may include a conical portion 90. The conical portion 90 may be inverted such that the entrance 88 of the tube 84 tapers as it approaches the body 86. Use of the conical portion 90 may be advantageous in reducing the DIPDs by reducing a magnitude of a radial component of the first and/or second gas velocity vector and therefore reduces flow of the first or second gases toward the muffle 42 (FIG. 1) of the heated section 22 thereby reducing particles entering the lower extended muffle 30 and being recirculated. In a first example (FIG. 4A), the entrance 88 may simply include the conical portion 90 tapering toward the body 86 of the tube 84. In a second example (FIG. 4B), the entrance 88 may incorporate a first flange 92 which is substantially coaxial with the tube 84. The first flange 92 may be placed on top of the conical portion 90 such that the entrance 88 tapers from the first flange 92 to the body 86. In a third example (FIG. 4C), a second flange 94 may be positioned on top of the first flange 92, the second flange 94 being perpendicular to the body 86 of the tube 84 and the first flange 92. The second flange 96 may extend inward and/or outward from the tube 84. Use of the examples depicted in FIGS. 4A-C may decrease the DIPDs per kilometer of produced optical fiber 46 from about 5% in examples with no entrance 88 (e.g., just the body 86 of the tube 84) to less than about 1.5% in examples using at least the conical portion 90.

Referring now to FIG. 5, depicted is an exemplary method 100 of producing the optical fiber 46. The method 100 may begin with step 104 of flowing the first gas into the optical fiber draw furnace 10. As explained above, the first gas may be flown into the fiber draw furnace 10 through the upper gas inlet 14. As the first gas may be a gas which is inert to the muffle 42, optical fiber preform 38 and/or other components of the fiber draw furnace 10, step 104 may further include flowing helium into the optical fiber draw furnace 10. It will be understood that any of the above noted first gases may additionally or alternatively flown into the fiber draw furnace 10.

Next, a step 108 of passing the first gas through the heated section 22 configured to contain and heat a glass source from which the optical fiber 46 is drawn is performed. The glass source may be the optical fiber preform 38 or other glass sources which may be utilized in the fiber draw furnace 10. As explained above, the high temperatures of the heated section 22 may result in the formation of particles which are entrained within the first gas as it passes through the heated section 22 and/or proximate the muffle 42.

Next, a step 112 of passing the first gas into the reclaim cylinder 26 is performed. As explained above, the reclaim cylinder 26 may be coupled to the heated section 22 through the top flange 76. It will be understood that one or more sections of pipe or tubing may be positioned between the reclaim cylinder 26 and the heated section 22 without departing from the teachings provided herein. The first gas is passed into the reclaim chamber 64 defined by the housing 60 of the reclaim cylinder 26. As explained above, as the reclaim chamber 64 has a greater diameter than the heated section 22, the velocity of the first gas may be slowed relative to the gas velocity of the first gas in the heated section 22.

Next, a step 116 of removing a portion of the first gas through at least one reclaim port 68 coupled with the reclaim cylinder 26 such that a vortex of the first gas is generated in the reclaim cylinder 26 is performed. The one or more reclaim ports 68 are tangentially oriented or coupled to the housing 60 of the reclaim cylinder 26 such that gases within the reclaim chamber 64 obtain an angular momentum. In other words, the vortex is generated within the reclaim chamber 64. As explained above, by removing the portion of the first gas through the tangentially oriented at least one reclaim port 68, the axis of rotation of the vortex is parallel with an axis of the reclaim cylinder 26. As the reclaim cylinder 26, the lower extended muffle 30 and the heated section 22 are all aligned, the axis of rotation of the vortex may be parallel with an axis of the lower extended muffle 30 and/or the heated section 22. According to various examples, a portion of the second gas may flow upward through the lower extended muffle 30 and into the reclaim chamber 64 of the reclaim cylinder 26 such that both the first and second gases form the vortex. As such, the one or more reclaim ports 68 may reclaim or remove a mixture of the first gas and second gas. The first and second gases may be reclaimed at a rate of from about 80% to about 95% of the combined first and second gas flow rate and the first gas volume fraction in the mixture gas is about 80% or greater. It will be understood that a portion of the first gas may not be captured by the reclaim ports 68 such that the reclaim cylinder 26 may pass a portion of the first gas from the reclaim cylinder 26 into the lower extended muffle 30.

Next, a step 120 of flowing the second gas from a gas inlet (e.g., the bottom gas inlet 34) at a rate configured to substantially recover a pressure drop associated with removing the portion of the first gas may be performed. As explained above, removal of the first and/or second gases by the reclaim ports 68 may result in a pressure drop occurring within the fiber draw furnace 10 which may result in the entraining of ambient air within the fiber draw furnace 10. Step 120 may include flowing a gas which is inert to the optical fiber from the bottom gas inlet 34.

It will be understood that although the steps of the method 100 are described in a sequential order, one or more of the steps may be performed at the same time. For example, all of the steps may be performed simultaneously. Further, it will be understood that the order of the steps of the method 100 may be changed without departing from the teachings provided herein.

Use of the present disclosure may offer a variety of advantages. First, by positioning the reclaim cylinder 26 between the heated section 22 and the lower extended muffle 30, a higher purity of the first gas may be reclaimed through the reclaim ports 68. In other words, the capture stream pulled through the reclaim ports 68 may have a larger volume fraction of the first gas than the second gas. Such a feature may be advantageous in decreasing costs associated with the use of helium as the reclaim cylinder 26 of the present disclosure may allow for a greater efficiency of capture as compared to conventional fiber draw furnaces. Second, by tangentially coupling or orienting the reclaim ports 68 relative to the housing 60 of the reclaim cylinder 26, gases present within the reclaim chamber 64 may obtain an angular momentum resulting in the formation of a vortex within the reclaim cylinder 26. As explained above, the formation of the vortex is advantageous in capturing relatively small particles which may otherwise agglomerate on walls of the lower extended muffle 30 and form DIPDS on the optical fiber 46. As such a greater usable length of optical fiber 46 may be produced from the presently disclosed fiber draw furnace 10 which results in decreased costs associated with the production of unusable lengths of optical fiber 46.

## Claims

1. A reclaim cylinder, comprising:
a single housing (60) coupled to a fiber draw furnace system, the housing defining a reclaim chamber (64);
a plurality of gas reclaim ports (68) spaced equidistant from each other and tangentially coupled to the housing;
a gas sampling port (52) tangentially or perpendicularly coupled to the housing, and
a particle sampling port (54) tangentially or perpendicularly coupled to the housing.

2. The reclaim cylinder of claim 1, wherein the fiber draw furnace system comprises:
a heated section (22) having a first end (22A) and a second end (22B), wherein the heated section is configured to hold an optical fiber preform (38);
an upper gas inlet (14) coupled to the first end of the heated section, wherein the upper gas inlet is configured to flow a first gas into the heated section;
a lower extended muffle (30) having a first end (30A) and a second end (30B);
a lower gas inlet (34) coupled to the second end of the lower extended muffle configured to allow a gas to flow into the lower extended muffle; and
wherein the reclaim cylinder (26) is coupled to the lower extended muffle between the first end of the lower extended muffle and the second end of the heated section.

3. The reclaim cylinder of any of claims 1-2, wherein the housing of the reclaim cylinder defines a first end coupled to the heated section and a second end coupled to the first end of the lower extended muffle, preferably wherein the plurality of gas reclaim ports are closer to the second end of the housing than the first end of the housing.

4. The reclaim cylinder of claim 3, wherein the gas sampling port and the particle sampling port are closer to the first end of the housing than the second end of the housing.

5. The reclaim cylinder of any of claims 1-4, wherein the gas sampling port and the particle sampling port are positioned along a length of the housing at the same height relative to each other, or
wherein the gas sampling port and the particle sampling port are positioned along a length of the housing at a 90 degree offset from each other.

6. The reclaim cylinder of any of claims 1-5, wherein an internal diameter of the housing is about 4.2 cm to about 7.8 cm, and/or wherein an external diameter of the housing is about 4.4 cm to about 7.8 cm.

7. The reclaim cylinder of any of claims 1-6, further comprising:
a tube extending from the second end of the lower extended muffle toward the first end that is substantially coaxial with the lower extended muffle, preferably wherein the tube extends from a lower extended muffle outlet.

8. The reclaim cylinder of any of claims 1-7, with one or more of the following:
wherein the plurality of gas reclaim ports are configured to generate a gas vortex within the reclaim chamber;
wherein the plurality of gas reclaim ports are configured to remove a portion of the first gas from the reclaim chamber;
wherein the lower gas inlet is configured to pass the second gas at a rate configured to substantially recover a pressure drop associated with removing the portion of the first gas.

9. A method of producing an optical fiber, comprising the steps of:
flowing a first gas into an optical fiber draw furnace;
passing the first gas through a heated section of the optical fiber draw furnace;
passing the first gas into a reclaim cylinder coupled to the optical fiber draw furnace, the reclaim cylinder comprising:
a single housing (60) defining a reclaim chamber (64),
a plurality of gas reclaim ports (68) spaced equidistant from each other and tangentially coupled to the housing,
a gas sampling port (52) tangentially or perpendicularly coupled to the housing, and
a particle sampling port (54) tangentially or perpendicularly coupled to the housing;
removing a portion of the first gas through the plurality of gas reclaim ports fluidly coupled to the reclaim cylinder such that a vortex of the first gas is generated in the reclaim cylinder, wherein the plurality of gas reclaim ports are spaced equidistant from each other and are tangentially coupled to the housing; and
flowing a second gas from a gas inlet at a rate configured to substantially recover a pressure drop associated with removing the portion of the first gas.

10. The method of claim 9, wherein the optical fiber draw furnace comprises:
the heated section (22) having a first end (22A) and a second end (22B), wherein the heated section is configured to hold an optical fiber preform (38);
an upper gas inlet (14) coupled to the first end of the heated section, wherein the upper gas inlet is configured to flow a first gas into the heated section;
a lower extended muffle (30) having a first end (30A) and a second end (30B); and
a lower gas inlet (34) coupled to the second end of the lower extended muffle configured to allow a gas to flow into the lower extended muffle.

11. The method of claim 10, wherein the reclaim cylinder is coupled to the lower extended muffle between the first end of the lower extended muffle and the second end of the heated section, and/or further comprising the step of passing a portion of the first gas from the reclaim cylinder into the lower extended muffle.

12. The method of any of claims 10 or 11, comprising one or more of the following:
wherein the step of removing the portion of first gas further comprises removing the portion of the first gas such that an axis of rotation of the vortex is parallel with an axis of the reclaim cylinder;
wherein the step of flowing a first gas into an optical fiber draw furnace further comprises flowing the first gas comprising helium into the optical fiber draw furnace;
wherein the step of flowing the second gas from the gas inlet further comprises flowing the second gas comprising a gas which is inert to the optical fiber from the gas inlet.

13. The method of any of claims 10-12, wherein the housing of the reclaim cylinder defines a first end coupled to the heated section and a second end coupled to the first end of the lower extended muffle, preferably wherein the plurality of gas reclaim ports are closer to the second end of the housing than the first end of the housing.

14. The method of claim 13, wherein the gas sampling port and the particle sampling port are closer to the first end of the housing than the second end of the housing.

15. The method of any of claims 9-14, with one or more of the following:
wherein the gas sampling port and the particle sampling port are positioned along a length of the housing at the same height relative to each other;
wherein the gas sampling port and the particle sampling port are positioned along a length of the housing at a 90 degree offset from each other;
wherein an internal diameter of the housing is about 4.2 cm to about 7.8 cm;
wherein an external diameter of the housing is about 4.4 cm to about 7.8 cm.

## Patentansprüche

1. Rückgewinnungszylinder, der Folgendes umfasst:
ein einzelnes Gehäuse (60), das mit einem Faserziehofensystem verbunden ist, wobei das Gehäuse eine Rückgewinnungskammer (64) definiert,
eine Vielzahl von Gasrückgewinnungsöffnungen (68), die im gleichen Abstand voneinander angeordnet und tangential mit dem Gehäuse verbunden sind;
eine Gasprobenahmeöffnung (52), die tangential oder senkrecht mit dem Gehäuse verbunden ist; und
eine Partikelprobenahmeöffnung (54), die tangential oder senkrecht mit dem Gehäuse verbunden ist.

2. Rückgewinnungszylinder nach Anspruch 1, wobei das Faserziehofensystem Folgendes umfasst:
einen beheizten Abschnitt (22) mit einem ersten Ende (22A) und einem zweiten Ende (22B), wobei der beheizte Abschnitt so konfiguriert ist, dass er einen Glasfaser-Vorformling (38) hält;
einen oberen Gaseinlass (14), der mit dem ersten Ende des beheizten Abschnitts verbunden ist, wobei der obere Gaseinlass so konfiguriert ist, dass er ein erstes Gas in den beheizten Abschnitt strömen lässt;
eine untere verlängerte Muffel (30) mit einem ersten Ende (30A) und einem zweiten Ende (30B); und
einen unteren Gaseinlass (34), der mit dem zweiten Ende der unteren verlängerten Muffel verbunden ist und so konfiguriert ist, dass er ein Gas in die untere verlängerte Muffel strömen lässt;
wobei der Rückgewinnungszylinder (26) zwischen dem ersten Ende der unteren verlängerten Muffel und dem zweiten Ende des beheizten Abschnitts mit der unteren verlängerten Muffel verbunden ist.

3. Rückgewinnungszylinder nach einem der Ansprüche 1 und 2, wobei das Gehäuse des Rückgewinnungszylinders ein erstes Ende definiert, das mit dem beheizten Abschnitt verbunden ist, und ein zweites Ende, das mit dem ersten Ende der unteren verlängerten Muffel verbunden ist. wobei sich die Vielzahl von Gasrückgewinnungsöffnungen vorzugsweise näher an dem zweiten Ende des Gehäuses befindet als an dem ersten Ende des Gehäuses.

4. Rückgewinnungszylinder nach Anspruch 3, wobei die Gasprobenahmeöffnung und die Partikelprobenahmeöffnung sich näher an dem ersten Ende des Gehäuses befindn als an dem zweiten Ende des Gehäuses.

5. Rückgewinnungszylinder nach einem der Ansprüche 1 bis 4, wobei die Gasprobenahmeöffnung und die Partikelprobenahmeöffnung entlang einer Länge des Gehäuses relativ zueinander auf der gleichen Höhe positioniert sind, oder
wobei die Gasprobenahmeöffnung und die Partikelprobenahmeöffnung entlang einer Länge des Gehäuses in einem Winkel von 90 Grad zueinander versetzt angeordnet sind.

6. Rückgewinnungszylinder nach einem der Ansprüche 1 bis 5, wobei ein Innendurchmesser des Gehäuses etwa 4,2 cm bis etwa 7,8 cm beträgt und/oder wobei ein Außendurchmesser des Gehäuses etwa 4,4 cm bis etwa 7,8 cm beträgt.

7. Rückgewinnungszylinder nach einem der Ansprüche 1 bis 6, der ferner Folgendes umfasst:
ein Rohr, das sich von dem zweiten Ende der unteren verlängerten Muffel zu dem ersten Ende erstreckt und im Wesentlichen koaxial zu der unteren verlängerten Muffel verläuft, wobei sich das Rohr vorzugsweise von einem Auslass der unteren verlängerten Muffel erstreckt.

8. Rückgewinnungszylinder nach einem der Ansprüche 1 bis 7, mit einem oder mehreren der Folgenden:
wobei die Vielzahl von Gasrückgewinnungsöffnungen so konfiguriert ist, dass sie einen Gaswirbel innerhalb der Rückgewinnungskammer erzeugen;
wobei die Vielzahl von Gasrückgewinnungsöffnungen so konfiguriert sind, dass sie einen Teil des ersten Gases aus der Rückgewinnungskammer entfernen;
wobei der untere Gaseinlass so konfiguriert ist, dass er das zweite Gas mit einer Rate durchlässt, die so konfiguriert ist, dass ein Druckabfall, der auf die Entfernung des Teils des ersten Gases zurückzuführen ist, im Wesentlichen ausgeglichen wird.

9. Verfahren zur Herstellung einer Glasfaser, das die folgenden Schritte umfasst:
Strömen eines ersten Gases in einen Glasfaserziehofen;
Leiten des ersten Gases durch einen beheizten Abschnitt des Glasfaserziehofens;
Leiten des ersten Gases in einen Rückgewinnungszylinder, der mit dem Glasfaserziehofen verbunden ist, wobei der Rückgewinnungszylinder Folgendes umfasst:
ein einzelnes Gehäuse (60), das eine Rückgewinnungskammer (64) definiert,
eine Vielzahl von Gasrückgewinnungsöffnungen (68), die im gleichen Abstand voneinander angeordnet und tangential mit dem Gehäuse verbunden sind,
eine Gasprobenahmeöffnung (52), die tangential oder senkrecht mit dem Gehäuse verbunden ist, und
eine Partikelprobenahmeöffnung (54), die tangential oder senkrecht mit dem Gehäuse verbunden ist;
Entfernen eines Teils des ersten Gases durch die Vielzahl von Gasrückgewinnungsöffnungen, die strömungsmäßig mit dem Rückgewinnungszylinder verbunden sind, so dass ein Wirbel des ersten Gases in dem Rückgewinnungszylinder erzeugt wird, wobei die Vielzahl von Gasrückgewinnungsöffnungen im gleichen Abstand voneinander beabstandet angeordnet und tangential mit dem Gehäuse verbunden sind; und
Strömen eines zweiten Gases aus einem Gaseinlass mit einer Rate, die so konfiguriert ist, dass ein Druckabfall, der auf die Entfernung des Teils des ersten Gases zurückzuführen ist, im Wesentlichen ausgeglichen wird.

10. Verfahren nach Anspruch 9, wobei der Glasfaserziehofen Folgendes umfasst:
den beheizten Abschnitt (22) mit einem ersten Ende (22A) und einem zweiten Ende (22B), wobei der beheizte Abschnitt so konfiguriert ist, dass er einen Glasfaser-Vorformling (38) hält;
einen oberen Gaseinlass (14), der mit dem ersten Ende des beheizten Abschnitts verbunden ist, wobei der obere Gaseinlass so konfiguriert ist, dass er ein erstes Gas in den beheizten Abschnitt strömen lässt;
eine untere verlängerte Muffel (30) mit einem ersten Ende (30A) und einem zweiten Ende (30B); und
einen unteren Gaseinlass (34), der mit dem zweiten Ende der unteren verlängerten Muffel verbunden ist und so konfiguriert ist, dass er ein Gas in die untere verlängerte Muffel strömen lässt.

11. Verfahren nach Anspruch 10, wobei der Rückgewinnungszylinder zwischen dem ersten Ende der unteren verlängerten Muffel und dem zweiten Ende des beheizten Abschnitts mit der unteren verlängerten Muffel verbunden ist, und/oder ferner umfassend den Schritt des Leitens eines Teils des ersten Gases aus dem Rückgewinnungszylinder in die untere verlängerte Muffel.

12. Verfahren nach einem der Ansprüche 10 oder 11, mit einem oder mehreren der Folgenden:
wobei der Schritt des Entfernens des Teils des ersten Gases außerdem das Entfernen des Teils des ersten Gases so umfasst, dass eine Drehachse des Wirbels parallel zu einer Achse des Rückgewinnungszylinders verläuft,
wobei der Schritt des Strömens eines ersten Gases in einen Glasfaserziehofen ferner das Strömen des ersten Gases, das Helium umfasst, in den Glasfaserziehofen umfasst;
wobei der Schritt des Strömens des zweiten Gases aus dem Gaseinlass ferner das Strömen des zweiten Gases aus dem Gaseinlass umfasst, welches ein Gas umfasst, das gegenüber der Glasfaser inert ist.

13. Verfahren nach einem der Ansprüche 10 bis 12, wobei das Gehäuse des Rückgewinnungszylinders ein erstes Ende definiert, das mit dem beheizten Abschnitt verbunden ist, und ein zweites Ende, das mit dem ersten Ende der unteren verlängerten Muffel verbunden ist, wobei sich die Vielzahl von Gasrückgewinnungsöffnungen vorzugsweise näher an dem zweiten Ende des Gehäuses befinden als an dem ersten Ende des Gehäuses.

14. Verfahren nach Anspruch 13, wobei die Gasprobenahmeöffnung und die Partikelprobenahmeöffnung sich näher an dem ersten Ende des Gehäuses befinden als an dem zweiten Ende des Gehäuses.

15. Verfahren nach einem Ansprüche 9 bis 14, mit einem oder mehreren der Folgenden:
wobei die Gasprobenahmeöffnung und die Partikelprobenahmeöffnung entlang einer Länge des Gehäuses auf der gleichen Höhe relativ zueinander angeordnet sind;
wobei die Gasprobenahmeöffnung und die Partikelprobenahmeöffnung entlang einer Länge des Gehäuses in einem Winkel von 90 Grad zueinander versetzt angeordnet sind;
wobei ein Innendurchmesser des Gehäuses etwa 4,2 cm bis etwa 7,8 cm beträgt;
wobei ein Außendurchmesser des Gehäuses etwa 4,4 cm bis etwa 7,8 cm beträgt.

## Revendications

1. Cylindre de régénération, comprenant :
une enveloppe (60) unique couplée à un système à four d'étirage de fibres, l'enveloppe définissant une chambre de régénération (64),
une pluralité d'orifices de régénération de gaz (68) équidistants les uns des autres et couplés tangentiellement à l'enveloppe,
un orifice de prélèvement de gaz (52) couplé tangentiellement ou perpendiculairement à l'enveloppe, et
un orifice de prélèvement de particules (54) couplé tangentiellement ou perpendiculairement à l'enveloppe.

2. Cylindre de régénération selon la revendication 1, dans lequel le système à four d'étirage de fibres comprend :
une section chauffée (22) présentant une première extrémité (22A) et une deuxième extrémité (22B), ladite section chauffée étant conçue pour retenir une préforme de fibre optique (38),
une entrée de gaz supérieure (14) couplée à la première extrémité de la section chauffée, ladite entrée de gaz supérieure étant conçue pour faire entrer un premier gaz dans la section chauffée,
une moufle étendue inférieure (30) présentant une première extrémité (30A) et une deuxième extrémité (30B), et
une entrée de gaz inférieure (34) couplée à la deuxième extrémité de la moufle étendue inférieure et conçue pour permettre à un gaz d'entrer dans la moufle étendue inférieure ;
ledit cylindre de régénération (26) étant couplé à la moufle étendue inférieure entre la première extrémité de la moufle étendue inférieure et la deuxième extrémité de la section chauffée.

3. Cylindre de régénération selon l'une quelconque des revendications 1 et 2, dans lequel l'enveloppe du cylindre de régénération définit une première extrémité couplée à la section chauffée et une deuxième extrémité couplée à la première extrémité de la moufle étendue inférieure, et dans lequel de préférence la pluralité d'orifices de régénération de gaz est plus proche de la deuxième extrémité de l'enveloppe que de la première extrémité de l'enveloppe.

4. Cylindre de régénération selon la revendication 3, dans lequel l'orifice de prélèvement de gaz et l'orifice de prélèvement de particules sont plus proches de la première extrémité de l'enveloppe que de la deuxième extrémité de l'enveloppe.

5. Cylindre de régénération selon l'une quelconque des revendications 1 à 4, dans lequel l'orifice de prélèvement de gaz et l'orifice de prélèvement de particules sont disposés dans la longueur de l'enveloppe à la même hauteur l'un par rapport à l'autre, ou
dans lequel l'orifice de prélèvement de gaz et l'orifice de prélèvement de particules sont disposés dans la longueur de l'enveloppe en étant décalés de 90 degrés l'un de l'autre.

6. Cylindre de régénération selon l'une quelconque des revendications 1 à 5, dans lequel le diamètre intérieur de l'enveloppe fait d'environ 4,2 cm à environ 7,8 cm, et/ou dans lequel le diamètre extérieur de l'enveloppe fait d'environ 4,4 cm à environ 7,8 cm.

7. Cylindre de régénération selon l'une quelconque des revendications 1 à 6, comprenant en outre :
un tube s'étendant à partir de la deuxième extrémité de la moufle étendue inférieure vers la première extrémité et qui est sensiblement coaxial avec la moufle étendue inférieure, ledit tube s'étendant de préférence à partir d'une sortie de la moufle étendue inférieure.

8. Cylindre de régénération selon l'une quelconque des revendications 1 à 7, comprenant une ou plusieurs des particularités suivantes :
la pluralité d'orifices de régénération de gaz est conçue pour générer un tourbillon de gaz dans la chambre de régénération,
la pluralité d'orifices de régénération de gaz est conçue pour retirer une partie du premier gaz de la chambre de régénération,
l'entrée de gaz inférieure est conçue pour laisser passer le deuxième gaz selon un taux conçu pour compenser sensiblement une chute de pression associée au retrait de ladite partie du premier gaz.

9. Procédé de production de fibres optiques, comprenant les étapes consistant à :
faire entrer un premier gaz dans un four d'étirage de fibres optiques ;
faire passer le premier gaz par une section chauffée du four d'étirage de fibres optiques ;
faire passer le premier gaz jusqu'à un cylindre de régénération couplé au four d'étirage de fibres optiques, le cylindre de régénération comprenant :
une enveloppe (60) unique définissant une chambre de régénération (64),
une pluralité d'orifices de régénération de gaz (68) équidistants les uns des autres et couplés tangentiellement à l'enveloppe,
un orifice de prélèvement de gaz (52) couplé tangentiellement ou perpendiculairement à l'enveloppe, et
un orifice de prélèvement de particules (54) couplé tangentiellement ou perpendiculairement à l'enveloppe ;
retirer une partie du premier gaz par la pluralité d'orifices de régénération de gaz couplés fluidiquement au cylindre de régénération de façon à générer un tourbillon de premier gaz dans le cylindre de régénération, ladite pluralité d'orifices de régénération de gaz étant équidistants les uns des autres et couplés tangentiellement à l'enveloppe; et
faire passer un deuxième gaz, par une entrée de gaz, selon un taux conçu de compenser sensiblement une chute de pression associée au retrait de ladite partie du premier gaz.

10. Procédé selon la revendication 9, dans lequel le four d'étirage de fibres optiques comprend :
la section chauffée (22) présentant une première extrémité (22A) et une deuxième extrémité (22B), ladite section chauffée étant conçue pour retenir une préforme de fibre optique (38),
une entrée de gaz supérieure (14) couplée à la première extrémité de la section chauffée, ladite entrée de gaz supérieure étant conçue pour faire entrer un premier gaz dans la section chauffée,
une moufle étendue inférieure (30) présentant une première extrémité (30A) et une deuxième extrémité (30B), et
une entrée de gaz inférieure (34) couplée à la deuxième extrémité de la moufle étendue inférieure et conçue pour permettre à un gaz d'entrer dans la moufle étendue inférieure.

11. Procédé selon la revendication 10, dans lequel le cylindre de régénération est couplé à la moufle étendue inférieure entre la première extrémité de la moufle étendue inférieure et la deuxième extrémité de la section chauffée, et/ou le procédé comprenant en outre l'étape consistant à faire passer une partie du premier gaz issue du cylindre de régénération dans la moufle étendue inférieure.

12. Procédé selon l'une quelconque des revendications 10 et 11, comprenant une ou plusieurs des particularités suivantes :
l'étape de retrait de ladite partie du premier gaz comprend en outre le retrait de ladite partie du premier gaz de façon que l'axe de rotation du tourbillon soit parallèle à l'axe du cylindre de régénération,
l'étape d'entrée d'un premier gaz dans un four d'étirage de fibres optiques comprend en outre l'entrée d'un premier gaz, dont de l'hélium, dans le four d'étirage de fibres optiques,
l'étape de passage d'un deuxième gaz, par une entrée de gaz, comprend en outre le passage d'un deuxième gaz, dont un gaz inerte vis-à-vis des fibres optiques, par ladite entrée de gaz.

13. Procédé selon l'une quelconque des revendications 10 à 12, dans lequel l'enveloppe du cylindre de régénération définit une première extrémité couplée à la section chauffée et une deuxième extrémité couplée à la première extrémité de la moufle étendue inférieure, et dans lequel de préférence la pluralité d'orifices de régénération de gaz est plus proche de la deuxième extrémité de l'enveloppe que de la première extrémité de l'enveloppe.

14. Procédé selon la revendication 13, dans lequel l'orifice de prélèvement de gaz et l'orifice de prélèvement de particules sont plus proches de la première extrémité de l'enveloppe que de la deuxième extrémité de l'enveloppe.

15. Procédé selon l'une quelconque des revendications 9 à 14, comprenant une ou plusieurs des particularités suivantes :
l'orifice de prélèvement de gaz et l'orifice de prélèvement de particules sont disposés dans la longueur de l'enveloppe à la même hauteur l'un par rapport à l'autre,
l'orifice de prélèvement de gaz et l'orifice de prélèvement de particules sont disposés dans la longueur de l'enveloppe en étant décalés de 90 degrés l'un de l'autre,
le diamètre intérieur de l'enveloppe fait d'environ 4,2 cm à environ 7,8 cm,
le diamètre extérieur de l'enveloppe fait d'environ 4,4 cm à environ 7,8 cm.
